Europäisches Patentamt

European Patent Office

Office européen des brevets

(11) Publication number: **0 063 016**
**B1**

# EUROPEAN PATENT SPECIFICATION

(45) Date of publication of patent specification: **31.07.85**

(51) Int. Cl.⁴: **F 16 F 9/54,** B 60 G 15/06

(21) Application number: **82301753.8**

(22) Date of filing: **02.04.82**

(54) **Suspension assembly for an automotive vehicle.**

(30) Priority: **11.04.81 JP 54728/81**

(43) Date of publication of application:
**20.10.82 Bulletin 82/42**

(45) Publication of the grant of the patent:
**31.07.85 Bulletin 85/31**

(84) Designated Contracting States:
**DE FR GB IT**

(56) References cited:
**FR-A-2 032 961**
**FR-A-2 259 711**
**FR-A-2 277 690**
**FR-A-2 319 813**
**FR-A-2 454 384**
**GB-A-1 238 642**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Kan, Hiroyasu c/o Nissan Motor Co.,**
**Ltd.**
**Tsurumi Plant 6-1, Daikoku-cho Tsurumi-ku**
**Yokohama-shi Kanagawa-ken (JP)**

(74) Representative: **Freed, Arthur Woolf et al**
**MARKS & CLERK 57-60 Lincoln's Inn Fields**
**London WC2A 3LS (GB)**

Courier Press, Leamington Spa, England.

# Description

The present invention relates generally to a suspension assembly for an automotive vehicle, in which driving stability is improved without affecting riding comfort. More particularly, the invention relates to an improvement for a bushing interposed between a vehicle body and a suspension member, which bushing increases the rigidity of the suspension assembly by increasing the damping force against rebound shock and keeps riding comfort at a compatible level in relation to a conventional suspension.

As is well known, a vehicle suspension mainly requires two contradictory things. One is driving stability which can be obtained by increasing the damping force against relative movement of the vehicle body and wheel to keep the positional relationship of the vehicle body and wheel constant. Although driving stability will be increased by increasing the damping forces, riding comfort is possibly reduced due to an increase in the rigidity of the suspension assembly. Namely, by increasing the rigidity, the suspension assembly is apt to transmit road shock directly to the vehicle thus causing an uncomfortable ride. On the other hand, riding comfort can be obtained by reducing the damping force of a suspension assembly to permit relatively large displacement of the vehicle body and wheel with respect to each other. This is, in turn, apt to increase rolling, pitching and yawing of a vehicle which reduces driving stability. Therefore, it is impossible to satisfy both requirements completely.

Prior specification No. FR—A—2 032 961 discloses a vehicle shock absorber interposed between a vehicle body and the vehicle wheel. The arrangement includes a bushing assembly comprising two resilient members which are interposed in a pre-loaded condition between the shock absorber and the vehicle body. The lower resilient member is of a more rigid material than the upper resilient member and therefore produces a greater damping force.

It has been found that bounding shock applied to the vehicle body mainly influences or affects riding comfort. Particularly, in consideration of a relatively short stroke of road shock which cannot be absorbed by a shock absorber in a suspension assembly, riding comfort can be kept at a compatible level if the bounding shock can be effectively absorbed.

Therefore, it is an object of the present invention to provide a suspension assembly which can improve driving stability without reducing riding comfort.

The present invention consists in a suspension assembly for a vehicle comprising: a shock absorber interposed between a vehicle body assembly and a vehicle wheel assembly for absorbing a relative displacement of the assemblies, which shock absorber includes a rod member reciprocating in response to a shock applied to one of said assemblies and connecting said shock absorber with said vehicle body assembly; and a bushing interposed between said rod member and said vehicle body assembly and being deformable in response to a load applied thereto, said bushing including an upper first member cooperating with the rod member in rebound and a lower second member cooperating with the rod member in bound, characterised in that said first member is relatively rigid in comparison with said second member so that the first member produces a larger damping force than that produced by the second member.

The present invention will be more fully understood from the detailed description given herebelow and from the accompanying drawings of the preferred embodiment of the present invention.

In the drawings:

Figure 1 is a front elevation of a Chapman's strut suspension including a structure of the preferred embodiment of the present invention;

Figure 2 is an enlarged sectional view showing a detail of the preferred embodiment of the suspension structure and a bushing therein shown in Figure 1; and

Figure 3 is a graph showing the resilient characteristics of the bushing relative to a damping force produced by a shock absorber in response to a shock applied thereto.

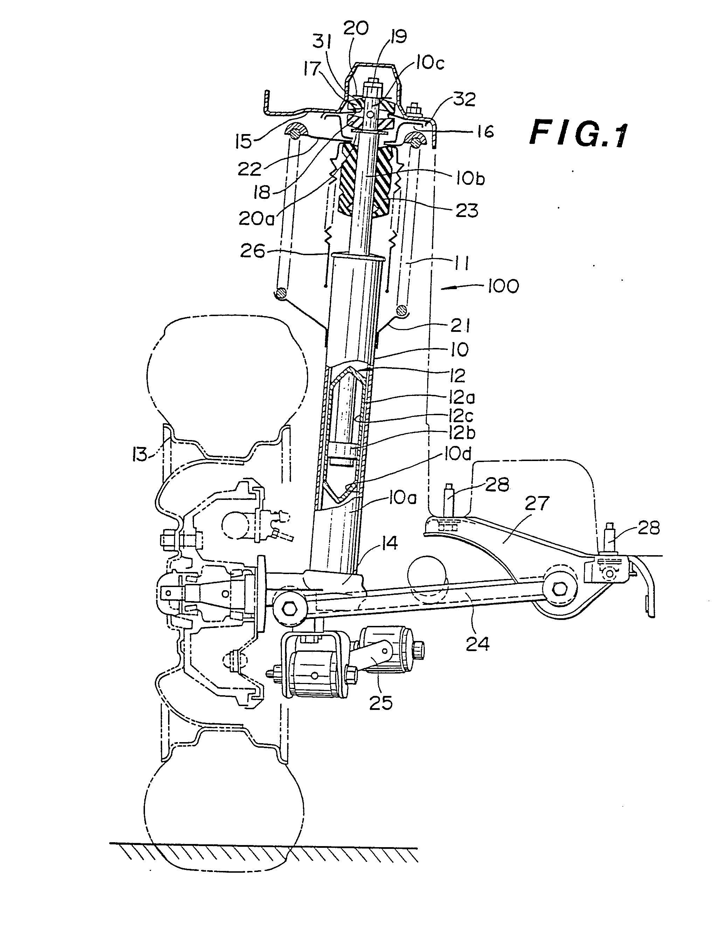

Referring now to the drawings, particularly to Figure 1, there is illustrated a parallel-link type Chapman's strut suspension. However hereinbelow is illustrated the preferred embodiment of the present invention which is applied to the Chapman's strut suspension, the suspension structure of the invention is applicable for any type of vehicle suspension, such as a McPherson's strut suspension, semi-trailing suspension of a rigid suspension.

In the Chapman's strut suspension shown in Figure 1, a strut 10 includes a cylindrical strut body 10a defining therein a hollow cylindrical chamber 10d. A shock absorber 12 is disposed within the chamber 10d and fixed to the strut 10. The shock absorber 12 has a thrusting piston 12b inserted into a hollow chamber 12c defined in an absorber cylinder 12a so that it can move axially in response to a shock applied to either a vehicle body 15 or a wheel 13. The piston 12b is connected to the vehicle body 15 by a strut rod 10b. The strut 10a is connected to a wheel spindle 14 in a *per se* well known manner.

A suspension coil 11 surrounds the strut 10 and is disposed between upper and lower spring seats 22 and 21 respectively. The lower spring seat 21 is fitted to the outer periphery of the strut body and the upper spring seat 22 is fixed onto a bracket 16 secured onto the vehicle body 15. Within an annular space defined by the strut 10 and the coil spring 11, an expandable cover member 26 is disposed so that it surrounds the upper portion of the strut rod 10b. A bumper rubber 23 is fitted to the lower portion of the strut rod 10b so that it prevents the strut body 10a from colliding against the vehicle body.

On the other hand, the wheel spindle 14 is also suspended onto a member 27 with a pair of transverse links 24 extending in parallel relationship with respect to each other. The member 27 is fixed to the vehicle body by fastening bolts 28. Further, the wheel spindle 14 is connected to the vehicle body 15 by a tension rod 25.

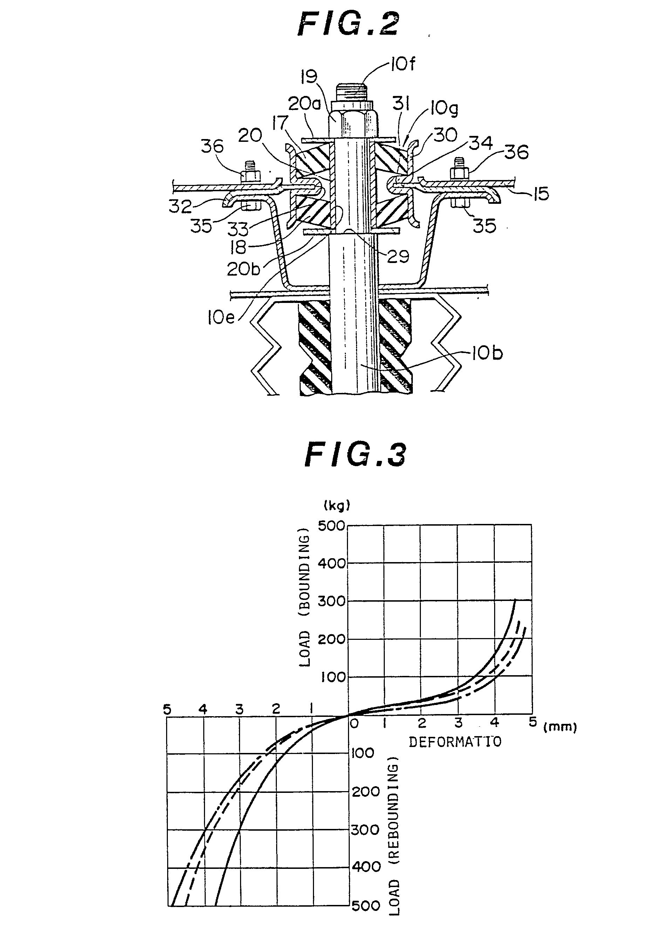

As shown in Figure 2, the strut rod 10b has a small diameter top portion 10e having a threaded end 10f. On the portion 10e, a hollow cylindrical member 20 with upper and lower collars 20a and 20b is mounted. A bushing 10g having a bowl-shaped upper piece 17 and a bowl-shaped lower piece 18 are provided to surround the member 20. The upper and lower pieces 17 and 18 of the bushing 10g are pre-loaded with the upper and lower collars 20a, 20b of the member 20. The member 20 is fixed at a shoulder 29 of the portion 10e by a fastening nut 19 engaging the threaded end 10f. An annular cylindrical member 30 with an inwardly depressed projection 31 extends circumferentially around the bushing 20. The projection 31 is inserted into a space between the upper piece 20a and the lower piece 20b to be sandwiched therebetween. A substantially disc-shaped member 32 with a central opening 33 engages the cylindrical member 30 by engagement of the circumferential edge of the opening 33 and a space 34 defined by the projection 31. The member 32 is secured onto the vehicle body 15 together with the bracket 16 by bolts 35 and nuts 36.

Here, the shock absorber 12 is provided with a damping characteristics such that a damping force is provided during the expansion stroke which is markedly larger than that in the compression stroke. By this, the shock absorber 12 produces a substantially large damping force against a rebound shock and a relatively small damping force against a bounding shock. The large damping force against the rebound shock may reduce rolling in cornering, or pitching in acceleration or deceleration to provide better stability of driving.

In the illustrated embodiment, the upper and lower pieces 17 and 18 of the bushing 10g are formed of rubber having Rubber Hardness respectively HS65—75 and HS55—65. In the pre-loaded condition, the upper piece 17 has a spring constant 15—25 kg/mm and the lower piece 18 has a spring constant 5—15 kg/mm, so that the sum of the spring constants of the upper and lower pieces are in a range 20—30 kg/mm.

In the construction set forth, the shock absorbing characteristics can be improved as shown in Figure 3. If a relatively short stroke of bounding or rebound shock is applied, the shock absorber 12 will not cause the piston 12b to move due to friction between the piston 12b and the internal periphery of the piston chamber 12c, and due to viscosity of the working fluid to absorb the shock and serves as a rigid bar to transmit shock on the wheel 13 to the vehicle body via the bushing 10g. When a relatively short stroke of bound shock is applied, the strut rod 10a moves upwardly further compressing the lower piece 18 between the projection 31 and the collar 20b. At the same time, since the dimension between the projection 31 and the collar 20a is increased, the upper piece 17 can be released from the applied pre-load. Since the lower piece 18 produces a relatively small damping force, the riding comfort may not be seriously affected. On the other hand, if a relatively short stroke of rebound shock is applied, the strut rod 10a moves downwardly with further compression of the upper piece 17 between the projection 31 and the collar 20a. At the same time, the dimension between the projection 31 and the collar 20b is increased to release the lower piece 18 from pre-load. Since, the damping force produced by the upper piece 17 is greater than that against the bounding shock, driving stability of the vehicle is increased. Namely, a relatively large damping force produced by the upper piece will work to stabilize rebound of the wheel in relation to the vehicle body in a relatively short period.

As shown in Figure 3, the upper piece 17 of the bushing 10g also cooperates with the shock absorber to absorb a relatively large stroke of the rebound shock. Figure 3 shows resilient deformation of the bushing 10g relative to load applied to the bushing i.e. the damping force produced by the shock absorber 12. The solid line in Figure 3 shows a characteristic of resilient deformation of the bushing 10g in originally applied condition, the chain line shows the resilient characteristics after vibrating $10^7$ times with a load ±8 kg, and the broken line shows the resilient characteristics after vibrating $10^5$ times with a load of 200 kg. It is thus apparent the deformation of the bushing 10g caused by rebound is smaller than that caused by bounding when the same load is applied. This means a larger damping force is produced against rebound. By this, driving stability of the vehicle is remarkably improved. On the other hand, since the damping force against bounding shock is maintained at the conventional, level and rigidity of the bushing against bounding shock will mainly influence riding comfort, the relatively small damping force produced by the bushing 10g against bounding shock as shown in Figure 3 provide adequate riding comfort.

While the specific embodiment of the present invention has been described hereabove in connection with a Chapman's strut suspension, the suspension structure and bushing of the present invention can be applied any vehicle suspensions. Therefore, the present invention should be considered as including any of possible modifications without departing from the principles thereof.

**Claims**

1. A suspension assembly for a vehicle comprising:
a shock absorber (12) interposed between a vehicle body assembly (15) and a vehicle wheel assembly (13) for absorbing a relative displacement of the assemblies (15, 13), which shock absorber includes a rod member (10b) reciprocating in response to a shock applied to one of said assemblies (15, 13) and connecting said shock absorber (12) with said vehicle body assembly (15); and

a bushing (10g) interposed between said rod member (10b) and said vehicle body assembly (15) and being deformable in response to a load applied thereto, said bushing (10g) including an upper first member (17) cooperating with the rod member in rebound and a lower second member (18) cooperating with the rod member in bound,

characterised in that said first member (17) is relatively rigid in comparison with said second member (18) so that the first member (17) produces a larger damping force than that produced by the second member (18).

2. An assembly as claimed in claim 1, characterised in that said shock absorber is adapted to produce a relatively larger damping force against a shock causing relative displacement of the vehicle body assembly (15) and the vehicle wheel assembly (13) away from each other than that against a shock causing displacement of the vehicle body assembly (15) and the vehicle wheel assembly (13) towards each other.

3. An assembly as claimed in claim 1 or 2, characterised in that said first and second members (17, 18) of said bushing (10g) have spring coefficients respectively approximately 15 to 25 kg/mm and 5 to 15 kg/mm.

4. An assembly as claimed in claim 3, characterised in that said first and second members (17, 18) of the bushing (10g) are respectively formed of rubber material having a Rubber Hardness of HS65 to HS75 and HS55 to HS65.

5. An assembly as claimed in claim 3, characterised in that the total spring coefficient of the first and second members (17, 18) of the bushing (10g) is in a range approximately 20 to 30 kg/mm.

## Patentansprüche

1. Aufhängung für ein Fahrzeug, mit einem zwischen einer Karosserie-Baugruppe (15) und einer Rad-Baugruppe (13) eingebauten Stoßdämpfer (12) zum Absorbieren von Bewegungen der Baugruppen (15, 13) relativ zueinander, wobei der Stoßdämpfer eine Stange (10b) aufweist, welche in Folge eines auf eine der Baugruppen (15, 13) ausgeübten Stoßes hin und her bewegbar ist und den Stoßdämpfer (12) mit der Karosserie-Baugruppe (15) verbindet, und

einem zwischen der Stange (10b) und der Karosserie-Baugruppe (15) eingebauten und durch eine darauf ausgeübte Belastung verformbaren Futter (10g) mit einem oberen ersten Teil (17), welches beim Ausfedern mit der Stange zusammenwirkt, und einem unteren zweiten Teil (18), welches beim Einfedern mit der Stange zusammenwirkt,

dadurch gekennzeichnet, daß das erste Teil (17) im Vergleich zu dem zweiten Teil (18) relativ steif ist, so daß das erste Teil (17) eine größere Dämpfungskraft erzeugt als das zweite Teil (18).

2. Aufhängung nach Anspruch 1, dadurch gekennzeichnet, daß der Stoßdämpfer so ausgelegt ist, daß er gegenüber einem eine Bewegung der Karosserie-Baugruppe (15) von der Rad-Baugruppe (13) weg bewirkenden Stoß eine relativ größere Dämpfungskraft erzeugt als gegenüber einem eine Bewegung der Karosserie-Baugruppe (15) und der Rad-Baugruppe (13) aufeinander zu bewirkenden Stoß.

3. Aufhängung nach Anspruch 1 oder 2, dadurch gekennzeichnet, daß das erste und das zweite Teil (17 bzw. 18) des Futters (10g) jeweils einen Federkoeffizienten von ungefähr 15 bis 25 kg/mm bzw. 5 bis 15 kg/mm haben.

4. Aufhängung nach Anspruch 3, dadurch gekennzeichnet, daß das erste und das zweite Teil (17 bzw. 18) des Futters (10g) jeweils aus einem Gummimaterial geformt sind, welches eine Gummi-Härte von HS65 vis HS75 bzw. HS55 bis HS65 hat.

5. Aufhängung nach Anspruch 3, dadurch gekennzeichnet, daß der Gesamt-Federkoeffizient des ersten und des zweiten Teils (17, 18) des Futters (10g) in einem Bereich von ungefähr 20 bis 30 kg/mm liegt.

## Revendications

1. Montage de suspension pour un véhicule comprenant:

un amortisseur (12) interposé entre un ensemble de carrosserie d'un véhicule (15) et un ensemble d'une roue d'un véhicule (13) pour absorber un déplacement relatif des ensembles (15, 13), lequel amortisseur comprend un organe formant tige (10b) ayant un mouvement alternatif en réponse à un choc appliqué à l'un desdits ensembles (15, 13) et reliant ledit amortisseur (12) audit ensemble de la carrosserie du véhicule (15); et

un coussinet (10g) interposé entre ledit organe formant tige (10b) et ledit ensemble de carrosserie du véhicule (15) et déformable en réponse à une charge qui lui est appliquée, ledit coussinet (10g) ayant un premier organe supérieur (17) coopérant avec l'organe formant tige au rebond et un second organe inférieur (18) coopérant avec l'organe formant tige au bond,

caractérisé en ce que ledit premier organe (17) est relativement rigide en comparaison audit second organe (18) de façon que ledit premier organe (17) produise une force d'amortissement plus importante que celle produite par le second organe (18).

2. Montage selon la revendication 1 caractérisé en ce que ledit amortisseur est adapté à produire une force relativement plus importante d'amortissement contre un choc provoquant un déplacement relatif de l'ensemble (15) de la carrosserie du véhicule et de l'ensemble (13) de la roue du véhicule au loin l'un de l'autre que celle contre un choc provoquant un déplacement de l'ensemble (15) de la carrosserie du véhicule et de l'ensemble (13) de la roue du véhicule l'un vers l'autre.

3. Montage selon la revendication 1 ou 2 caractérisé en ce que lesdits premier et second organes (17, 18) dudit coussinet (10g) ont des coefficients d'élasticité respectivement d'environ 15 à 25 kg/ mm et 5 à 15 kg/mm.

4. Montage selon la revendication 3 caractérisé en ce que lesdits premier et second organes (17, 18) du coussinet (10g) sont respectivement formés en un matériau de caoutchouc ayant une Dureté de Caoutchouc de HS65 à HS75 et HS55 à HS65.

5. Montage selon la revendication 3 caractérisé en ce que le coefficient total d'élasticité des premier et second organes (17, 18) du coussinet (10g) est compris entre environ 20 et 30 kg/mm.

0 063 016

*FIG.1*

# FIG.2

# FIG.3